Europäisches Patentamt

European Patent Office

Office européen des brevets

(11) Veröffentlichungsnummer: **0 498 226 A2**

## EUROPÄISCHE PATENTANMELDUNG

(21) Anmeldenummer: **92101123.5**

(22) Anmeldetag: **24.01.92**

(51) Int. Cl.5: **C08L  25/08**, C08L 33/10, C08L 33/06, //(C08L25/08, 33:06),(C08L33/10,33:06), (C08L25/08,33:06,51:04)

(30) Priorität: **06.02.91 DE 4103534**

(43) Veröffentlichungstag der Anmeldung: **12.08.92 Patentblatt  92/33**

(84) Benannte Vertragsstaaten: **DE FR GB IT**

(71) Anmelder: **BAYER AG**

**W-5090 Leverkusen 1 Bayerwerk(DE)**

(72) Erfinder: **Piejko, Karl-Erwin, Dr.**
**Unterscheider Weg 7a**
**W-5060 Bergisch Gladbach 2(DE)**
Erfinder: **Braese, Hans-Eberhard, Dipl.-Ing.**
**Käthe-Kollwitz-Strasse 3**
**W-5000 Köln 71(DE)**
Erfinder: **Ostarek, Ralph, Dr.**
**Halskestrasse 13**
**W-4000 Düsseldorf 1(DE)**
Erfinder: **Lindner, Christian, Dr.**
**Im Wasserblech 11**
**W-5000 Köln 80(DE)**

(54) Vinylpolymerisatformmassen enthaltend Polymerisate auf Basis langkettiger (Meth)Acrylate.

(57) Formmassen aus Vinylpolymerisaten, Polymerisaten auf Basis von (Meth)Acrylsäure-$C_{10}$-$C_{40}$-Alkylestern und gegebenenfalls Pfropfkautschuken zeichnen sich durch eine verbesserte Verarbeitungseigenschaft aus, wobei die Gebrauchseigenschaften unverändert bleiben.

Die Erfindung betrifft Formmassen aus Vinylpolymerisaten, Polymerisaten auf Basis von (Meth)-Acrylsäure-$C_{10}$-$C_{40}$-Alkylestern und gegebenenfalls Pfropfkautschuken. Die Formmassen zeichnen sich durch verbesserte Verarbeitungseigenschaften wie Fließen bei unveränderten Gebrauchseigenschaften wie Wärmestandfestigkeit oder Zähigkeit aus.

Formmassen aus Vinylpolymerisaten, wie ABS-Formmassen, werden bei der Verarbeitung auf Walzen, Knetern oder Extrudern üblicherweise niedermolekulare und/oder hochmolekulare Additive, wie Fettsäureestern, z.B. Stearate, Polyethylenwachse, Amidwachse, zugesetzt. Diese Additive verbessern das Gleitverhalten und Fließen der Formmassen, um z.B. ein Kleben, Verbacken oder Formverschmutzungen zu vermeiden oder um durch verbessertes Fließen Formkörper mit ungestörten Oberflächen oder verkürzte Verarbeitungszeiten zu erzielen. Die Menge der Additive und damit die erreichbare Wirkung sind jedoch beschränkt, da die Additive auch zu Nachteilen führen können. Mit den Formmassen verträgliche Typen bewirken eine starke Weichmachung der ABS-Hartphasen und damit eine Verringerung der Wärmeformbeständigkeit. Unverträgliche Typen können zu gestörten Oberflächen der Formkörper führen. Darüber hinaus neigen die niedermolekularen Additive dazu, aus den Formmassen bei der Verarbeitung auszuschwitzen und selbst die Formen bzw. die Endformkörper zu verschmutzen.

Es besteht daher ein Bedarf an Vinylpolymerisat-Formmassen, die sich durch eine verbesserte Verarbeitbarkeit bei unveränderten Gebrauchseigenschaften auszeichnen.

Gegenstand der Erfindung sind Formmassen aus:

A        30 bis 99,9, vorzugsweise 50 bis 94,5 Gew.-% eines thermoplastischen Vinyl(co)polymerisats aus

A.1      50 bis 99 Gew.-Teilen mindestens eines Monomeren aus der Gruppe der Vinylaromaten und Methacrylsäure-$C_1$-$C_4$-Alkylester und

A.2      1 bis 50 Gew.-Teilen mindestens eines Monomeren aus der Gruppe der Vinylcyanide, (Meth)-Acrylsäure-$C_1$-$C_8$-Alkylester sowie der ethylenisch ungesättigten Carbonsäuren und den davon abgeleiteten Derivaten, wie Anhydride und Imide,

B        0 bis 60, vorzugsweise 5 bis 40 Gew.-% eines Pfropfpolymerisats von

B.1      5 bis 95 Gew.-Teilen einer Pfropfauflage aus Vinylmonomerpolymerisat, wobei die Pfropfauflage erhalten wurde durch Pfropfpolymerisation einer Monomermischung aus

B.1.1    50 bis 99 Gew.-Teilen mindestens eines Monomeren aus der Gruppe der Vinylaromaten und Methacrylsäure-$C_1$-$C_4$-Alkylester und

B.1.2    1 bis 50 Gew.-Teilen mindestens eines Monomeren aus der Gruppe der Vinylcyanide, (Meth)-Acrylsäure-$C_1$-$C_8$-Alkylester, sowie der ethylenisch ungesättigten Carbonsäuren und den davon abgeleiteten Derivaten, wie Anhydride und Imide, auf

B.2      5 bis 95 Gew.-Teile einer vernetzten, teilchenförmigen, elastomeren Pfropfgrundlage mit einem durchschnittlichen Teilchendurchmesser ($d_{50}$-Wert) von 0,05 bis 5 $\mu$m, vorzugsweise 0,1 bis 0,6 $\mu$m und einer Glasübergangstemperatur < 10 °C, und

C        0,1 bis 70, vorzugsweise 0,5 bis 50, besonders bevorzugt 1,0 bis 10 Gew.-% eines Polymerisats aus

C.1      (Meth)Acrylsäure-$C_{10}$-$C_{40}$-Alkylestern, wobei

C.2      bis zu 80 Gew.-%, vorzugsweise von 0 bis 70 Gew.-%, insbesondere von 10 bis 60 Gew.-% der Komponente C.1 durch Styrol, $\alpha$-Methylstyrol, Acrylnitril oder Methacrylsäure-$C_1$-$C_4$-Alkylester oder Mischungen daraus ersetzt sein können,

und wobei die Polymerisate C eine Sprödigkeitstemperatur von über +2 °C besitzen und sich die Menge der Komponenten zu 100 Gew.-% addieren.

Bevorzugte Alkylester der (Meth)-Acrylsäure gemäß C.1 sind solche von $C_{12}$-$C_{30}$-Alkoholen, insbesondere von $C_{14}$-$C_{28}$-Alkoholen und ganz besonders von $C_{16}$-$C_{26}$-Alkoholen.

Komponente A:

Geeignete Komponenten A sind (Co)Polymerisate von mindestens einem Monomeren aus A.1 50 bis 99 Gew.-Teilen Vinylaromaten, wie Styrol, $\alpha$-Methylstyrol, kernsubstituiertes Styrol, wie p-Methylstyrol, p-Chlorstyrol sowie Methacrylsäure-($C_1$-$C_4$)-Alkyle, wie Methylmethacrylat, Ethylmethacrylat oder Mischungen dieser Monomere, und A.2 1 bis 50 Gew.-Teilen Vinylcyanide (ungesättigte Nitrile), wie Acrylnitril und Methacrylnitril, (Meth)Acrylsäure-($C_1$-$C_8$)-Alkyle, wie Methylmethacrylat, n-Butylacrylat, tert.-Butylacrylat, ungesättigte Carbonsäuren, wie Maleinsäure, sowie Derivate (wie Anhydride und Imide) ungesättigter Carbonsäuren, beispielsweise Maleinsäureanhydrid und N-Phenyl-Maleinimid, oder Mischungen der genannten Monomere.

Die (Co)Polymerisate A sind harzartig, thermoplastisch und kautschukfrei.

Bevorzugte (Co)Polymerisate A umfassen Copolymerisate aus

A.1 50 bis 90 Gew.-% Styrol, α-Methylstyrol, Methylmethacrylat oder Mischungen daraus und

A.2 10 bis 50 Gew.-% (Meth)Acrylnitril, Methylmethacrylat, Maleinsäureanhydrid oder Mischungen daraus,

besonders bevorzugt sind Copolymerisate aus A.1 Styrol und/oder α-Methylstyrol und A.2 Acrylnitril.

Die Vinyl(Co)Polymerisate A sind bekannt und lassen sich durch radikalische Polymerisation, insbesondere durch Emulsions-, Suspensions-, Lösungs- oder Massepolymerisation herstellen. Die (Co)Polymerisate gemäß Komponente A besitzen vorzugsweise Molekulargewichte $M_w$ (Gewichtsmittel, ermittelt durch Lichtstreuung oder Sedimentation) zwischen 15 000 und 200 000.

Komponente B:

Die gegebenenfalls enthaltenen Komponenten B sind Pfropfcopolymerisate von Monomeren B.1 auf kautschukelastische Grundlagen B.2.

Monomere B.1 sind B.1.1 Vinylaromaten, wie Styrol, α-Methylstyrol, kernsubstituiertes Styrol, wie p-Methylstyrol, p-Chlorstyrol, sowie Methacrylsäure-($C_1$-$C_4$)-Alkyle, wie Methylmethacrylat, Ethylmethacrylat oder Mischungen dieser Monomere. Beispiele für Monomere B.1.2 sind Vinylcyanide (ungesättigte Nitrile) wie Acrylnitril und Methacrylnitril, (Meth)-Acrylsäure-($C_1$-$C_8$)-Alkyle, wie Methylmethacrylat, n-Butylacrylat, tert.-Butylacrylat, ungesättigte Carbonsäuren, wie Maleinsäure, sowie Derivate (wie Anyhdride und Imide) ungesättigter Carbonsäuren, beispielsweise Maleinsäureanhydrid und N-Phenyl-Maleinimid, oder Mischungen der genannten Monomere.

Bevorzugte Monomere B.1.1 sind Styrol, α-Methylstyrol und Methylmethacrylat, bevorzugte Monomere B.1.2 sind Acrylnitril, Maleinsäureanhydrid und Methylmethacrylat.

Besonders bevorzugte Monomere sind B.1.1 Styrol, α-Methylstyrol und B.1.2 Acrylnitril.

Als Kautschukgrundlagen für die Pfropfpolymerisate B geeignet sind beispielsweise Dienkautschuke, EP(D)M-Kautschuke, also solche auf Basis Ethylen/Propylen, Acrylat-, Polyurethan-, Silikon-, Chloropren- und Ethylen/Vinylacetat-Katuschuke.

Bevorzugte Kautschuke B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperatur der Komponente B.2 unterhalb 10°C, vorzugsweise unterhalb -10°C liegt. Besonders bevorzugt als Dienkautschuk wird reiner Polybutadienkautschuk.

Geeignete Acrylatkautschuke B.2 der Polymerisate B sind vorzugsweise Polymerisate aus Acrylsäurealkylestern, gegebenenfalls mit bis zu 40 Gew.-%, bezogen auf B.2, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkyl-ester, wie Chlorethylacrylat oder Mischungen dieser Monomere.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin und Triallylbenzole.

Die Menge der vernetzenden Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 363 154 und DE-OS 3 631 539 beschriebenwerden.

3

Der Gelanteil der Pfropfgrundlage B.2 beträgt bevorzugt mindestens 60 Gew.-% (in Dimethylformamid), der mittlere Teilchendurchmesser $d_{50}$ des Pfropfpolymerisats B 0,05 bis 5 $\mu$m, vorzugsweise 0,1 bis 0,6 $\mu$m.

Die Pfropfcopolymerisate B werden durch radikalische Polymerisation, z.B. durch Emulsions-, Suspensions-, Lösungs- oder Massepolymerisation, vorzugsweise durch Emulsionspolymerisation hergestellt.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B solche Produkte verstanden, die durch Polymerisation der Pfropfmonomere in Gegenwart der Pfropfgrundlage gewonnen werden.

Der Gelgehalt der Pfropfgrundlage B.2 wird bei 23°C in einem geeigneten Lösungsmittel bestimmt (M. Hoffmann, H. Krömer, R. Kuhn; Polymeranalytik I und II, Georg-Thieme-Verlag, Stuttgart 1977).

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Komponente C:

Die erfindungsgemäß einzusetzenden thermoplastischen Polymerisate C sind entweder als solche bereits bekannt oder nach bekannten Verfahren erhältlich (siehe beispielsweise GB-OS 2 076 171 oder DE-AS 2 724 360).

Die $C_{10}$-$C_{40}$-Alkylreste in den Monomeren C.1) können linear oder verzweigt, ungesättigt oder gesättigt sein, bevorzugt sind lineare, gesättigte $C_{10}$-$C_{40}$-Alkylreste. Geeignete Alkylreste sind beispielsweise Octadecyl, 1-Eicosanyl und 1-Docosanyl.

Bevorzugte Monomere C.1) sind beispielsweise Stearylacrylat, Behenylacrylat bzw. 1-Docosanylacrylat und Eicosanylacrylat und die entsprechenden Ester der Methacrylsäure wie Stearylmethacrylat, 1-Docosanylmethacrylat und Eicosanylmethacrylat.

Geeignete Monomere C.2) sind Styrol, $\alpha$-Methylstyrol, Acrylnitril oder Methacrylsäure-$C_1$-$C_4$-Alkylester wie Methalsäuremethylester, Methacrylsäureethylester, Methacrylsäurepropylester, Methacrylsäure-iso-propylester, Methalsäurebutylester und Methacrylsäure-iso-butylester.

Bevorzugte Monomere C.2) sind Styrol, Acrylnitril und Methacrylsäuremethylester.

Die unvernetzten Polymerisate C aus den Monomeren C.1) und gegebenenfalls C.2) sollen Sprödigkeitstemperaturen von mehr als +2°C, vorzugsweise von mehr als +10°C haben.

Die Sprödigkeitstemperaturen sind im Falle rein amorpher Polymere gleichzusetzen mit deren Glastemperaturen (zu den Glastemperaturen von Polymeren siehe "Polymer Handbook", 2. Aufl., Wiley & Sons, New York 1975, S. III/139 f). Polymere, enthaltend die Monomeren C.1), können jedoch ab bestimmten C-Kettenlängen der Alkoholreste der Monomeren C.1) und von bestimmten Anteilen der Monomeren C.1) an teilkristallin vorliegen; die Sprödigkeit der Polymerisate wird in diesen Fällen auch durch die Menge der kristallinen Anteile und deren Schmelztemperatur beeinflußt (zu den Sprödigkeitstemperaturen von Homo-Poly(meth)acrylsäureestern s. H.G. Elias, "Makromoleküle", Hüthig & Wepf, Basel-Heidelberg 1971; S. 313; zu den Glas- und Schmelztemperaturen von Copolymeren mit zur Kristallisation befähigten Monomeren (mit den Beispielen Octadecylacrylat/Methylmethacrylat) s. E.F. Jordan jr., B. Artymyshyn, A. Speca, A.N. Wrigley, J. Polym. Sci. A-1, Vol.1, 3319-3365 (1971) und E.F. Jordan jr., ibid, 3367-3378).

Die Zusammensetzung der Polymerisate C, enthaltend Monomere C.1), die unterschiedliche C-Kettenlängen der Alkoholreste besitzen können, und gegebenenfalls Monomere C.2) muß auf alle Fälle so gewählt werden, daß die Glastemperatur der Polymerisate mehr als +2°C, vorzugsweise mehr als +10°C beträgt oder daß die C-Kettenlängen der Alkoholreste der Monomeren C.1) so groß sind und die Anteile dieser Monomeren im Polymerisat so hoch sind, daß die Polymerisate kristalline Phasen enthalten und damit kein Elastomer darstellen.

Die Glastemperaturen der Polymerisate bzw. das Vorliegen kristalliner Phasen lassen sich beispielsweise durch differentielle Thermoanalyse bestimmen.

Die Herstellung der Komponente C kann nach beliebigen Polymerisationsverfahren in Masse, Lösung, Wasser, Suspension, Dispersion und Emulsion radikalisch, thermisch oder ionisch erfolgen. Bevorzugt wird die Komponente C in Masse oder in Emulsion hergestellt.

Im Falle der bevorzugten Emulsionspolymerisation wird vorzugsweise so vorgegangen, daß aus einer Lösung der Monomeren C.1) und gegebenenfalls C.2), die bis zu 100 Gew.-% vorzugsweise bis zu 50 Gew.-% und insbesondere bis zu 25 Gew.-%, bezogen auf die Gewichtssumme, der zu polymerisierenden Monomeren der Komponente C, eines inerten organischen Lösungsmittels enthält, und einer wäßrigen Lösung geeigneter Emulgatoren mittels Rührwerken, Emulgiermaschinen, beispielsweise Homogenisatoren, oder mittels Verdüsen eine Voremulsion hergestellt wird.

Entsprechende Emulgieraggregate sind dem Fachmann bekannt. Als Emulgatoren sind anionische, kationische oder nichtionische geeignet wie beispielsweise höhere aliphatische Fettsäuren, organische Sulfonsäuren oder Schwefelsäurehalbester, Alkylammoniumsalze, polyethoxylierte Phenolderivate oder aliphatische polyethoxylierte Polyetherblockpolymere. Das Verhältnis der wäßrigen zu organischen Phase der Voremulsion kann dabei in weiten Grenzen variieren; bevorzugt liegt das Verhältnis der wäßrigen zur organischen Phase zwischen 9/1 und 1/1. Die Voremulsion wird dann mit Hilfe üblicher Radikalinitiatoren unter Anwendung üblicher Bedingungen kontinuierlich, halbkontinuierlich oder batchweise polymerisiert.

Die Einstellung des Molekulargewichts der Komponente C kann durch verschiedene Maßnahmen erreicht werden, wie Temperatur, Monomerkonzentration, Startermenge oder durch Einsatz sogenannter Regler, wie Organoschwefel-Verbindungen, beispielsweise Mercaptane und/oder Disulfide, wobei langkettige Mercaptane wie n- oder tert.-Dodecylmercaptane vorteilhaft sind.

Die Regler werden normalerweise im Monomergemisch gelöst und die Mischung danach polymerisiert. Eine derartige Molekulargewichtseinstellung von Vinylpolymeren ist dem Fachmann geläufig.

Polymerisate C besitzen Molekulargewichte Mw (Gewichtsmittel ermittelt durch Lichtstreuung oder Sedimentation) zwischen 5000 g/Mol und 5000 000 g/Mol, bevorzugt zwischen 10 000 g/Mol und 300 000 g/Mol.

Bevorzugte Komponenten A, C und gegebenenfalls B werden durch Emulsionspolymerisation hergestellt. Zur Aufarbeitung zu Polymerisatpulvern wird dabei ein spezielles Verfahren zur Cokoagulation bevorzugt, das in der DE-OS 3 813 363 beschrieben ist. Die Latices der Komponenten A und C werden dabei gleichzeitig, aber getrennt koaguliert und die Koagulatsuspensionen sofort vereinigt. Der Latex der Komponente B kann dabei mit A oder C vermischt, bzw. auf die beiden Latices aufgeteilt sein, oder auch getrennt aufgearbeitet werden. Bevorzugt wird der Latex der Komponente B mit dem der Komponente C vereinigt und die Mischung dem Cokoagulationsverfahren zugeführt. Polymerisationmischungen, die nach diesem Verfahren erhalten werden, sind besonders bevorzugt. Sie weisen verbesserte Pulvereigenschaften wie Staubverhalten, Fließen auf und lassen sich daher technisch einfacher weiter zu Formkörpern verarbeiten.

Weiterer Gegenstand der Erfindung sind deshalb Formmassen aus A, gegebenenfalls B, und C, hergestellt durch das in der DE-OS 3 813 363 beschriebene Verfahren der Cokogulation entsprechender Emulsionspolymerisate.

Die erfindungsgemäße Formmassen weisen auch in Kombination mit weiteren Thermoplasten wie PVC verbesserte Verarbeitungseigenschaften auf.

Weiterer Gegenstand der Erfindung sind deshalb Formmassen aus Polyinylchlorid und den erfindungsgemäßen Komponenten A, C und gegebenenfalls B. Der Anteil PVC in diesen Formmassen liegt bevorzugt zwischen 40 und 98 Gew.-%, insbesondere zwischen 50 und 90 Gew.-%.

Obwohl die erfindungsgemäßen Formmassen verbesserte Verarbeitungseigenschaften wie Fließverhalten, Nichtklebrigkeit und auch verbesserte Gebrauchseigenschaften wie ungestörte Oberflächen aufweisen, können übliche Additive und Verarbeitungshilfsmittel zusätzlich enthalten sein. Die geschilderten Effekte lassen sich dadurch in bekanntem Maße weiter verstärken.

Desweiteren können die erfindungsgemäßen Formmassen weitere Zusätze wie Stabilisatoren, Farbstoffe, Pigmente, Flammschutzmittel und übliche Füll- und Verstärkungsmittel in üblichen Konzentrationen enthalten. Die verbesserten Verarbeitungseigenschaften der erfindungsgemäßen Formmassen kommen insbesondere in Kombination mit Pigmenten oder Füllstoffen zum Tragen, wo eine gleichmäßige Verteilung der Füllstoffe bzw. Pigmente durch das verbesserte Fließen erleichtert wird.

Beispiele

Eingesetzte Komponenten:

**A 1:**

Copolymer-Latex, hergestellt aus $\alpha$-Methylstyrol/Acrylnitril (69/31 Gew.-Verhältnis) durch radikalische Emulsionspolymerisation in Gegenwart von Natriumsalzen der disproportionierten Abietinsäure als Emulgator. Das isolierte Polymerisat besitzt einen L-Wert von 60.

(Der L-Wert ist definiert als $(\eta_{rel}-1)/0{,}005$ mit $\eta_{rel}$ = relative Lösungsviskosität, gemessen in Dimethylformamid bei 25°C und einer Konzentration von 0,005 g/cm$^3$).

5

**A 2:**

Copolymer-Latex, hergestellt aus α-Methylstyrol/Acrylnitril (72/28 Gew.-Verhältnis) durch radikalische Emulsionspolymerisation in Gegenwart von Natriumsalzen von $C_{14}$-$C_{18}$-Alkylsulfonsäuren als Emulgator. Das isolierte Polymerisat besitzt einen L-Wert von 64.

**C 1:**

Eine Mischung aus 700 g Stearylmethacrylat, 700 g Styrol und 3 g tert.-Dodecylmercaptan wird mit Hilfe eines Hochgeschwindigkeitsrührers in einer Lösung aus 25 g Natriumsalz von $C_{14}$-$C_{18}$-Alkylsulfonsäuren in 2810 g Wasser emulgiert.

Ein Fünftel dieser Emulsion wird unter Rühren und unter einem leichten Stickstoffstrom auf 75°C erhitzt und mit einer Lösung aus 6 g Kaliumperoxodisulfat in 140 g Wasser versetzt. Innerhalb zwei Stunden werden die restliche Emulsion und eine Lösung aus 12 g Natriumsalz von $C_{14}$-$C_{18}$-Alkylsulfonsäuren in 400 g Wasser gleichmäßig bei 75°C zudosiert. Anschließend wird vier Stunden bei 75°C auspolymerisiert. Es wird ein Latex mit einem Feststoffgehalt von 29 Gew.-% erhalten. Das isolierte Polymerisat besitzt einen L-Wert von 55.

**C2:**

Zur Herstellung des Polymerisates C 2, die im übrigen analog zur Herstellung von C 1 erfolgte, wurde folgende Monomermischung verwendet:

| 1400 g | Stearylmethacrylat |
|--------|--------------------|
| 7 g | tert.-Dodecylmercaptan |

Die Zeit zum Auspolymerisieren betrug 10 Stunden.

**Beispiel 1**

Der Latex der Komponente A 1 und der Latex der Komponente C 1 werden bei 98°C unter kräftigen Rühren in einem Feststoffverhältnis von 95/5 (A 1/C 1) getrennt, aber gleichzeitig in eine wäßrige Magnesiumsulfatlösung eindosiert und cokoaguliert. Das erhaltene Koagulat wird abfiltriert, gewaschen, getrocknet und der Staubanteil bestimmt.

Als Maß für den Staubanteil dient die Schwächung eines durch einen Behälter gehenden Lichtstrahls, die durch das Aufwirbeln von Staub in diesem Behälter hervorgerufen wird. Der Staub wird durch das Herabfallen von Polymerisat-Pulver unter standardisierten Bedingungen (d.h. Herabfallen einer bestimmten Menge auf einer durch die Apparatur vorgegebenen Höhe) aufgewirbelt. Die Lichtschwächung wird sofort nach dem Aufprall des Pulvers auf den Boden des Behälters und 34 sec. später gemessen. (Die Prüfung erfolgt mit 30 g Pulver in einem modifizierten Staubmeßgerät der Fa. Cassela). Es werden Werte von 41 % und 20 % Lichtschwächung erhalten.

**Beispiel 1.1**

Analog Beispiel 1 wird ein Pulver aus 95 Gew.-% der Komponente A1 und 5 Gew.-% der Komponente C2 hergestellt. Bei einer Staubmessung analog Beispiel 1 werden Werte von 29 % und 16 % Lichtschwächung erhalten.

**Beispiel 2 (Vergleich)**

Analog Beispiel 1 wird der Latex der Komponente A 1 separat koaguliert und zu einem Pulver aufgearbeitet. Bei einer Staubmessung analog Beispiel 1 werden Werte von 57 % und 28 % Lichtschwächung erhalten, d.h. das Pulver besitzt höhere Staubanteile als die Pulver aus den Beispielen 1 und 1.1.

**Beispiel 3**

Analog Beispiel 1 wird ein Pulver aus 95 Gew.-% der Komponente A 2 und 5 Gew.-% der Komponente C 2 hergestellt.

Beispiel 4 (Vergleich)

Analog Beispiel 2 wird ein Pulver aus 100 % der Komponente A 2 hergestellt.

Herstellung und Prüfung der Formmassen

Die Polymerisatpulver der Beispiele 1-4 werden ohne weitere Zusätze bei den in Tabelle 1 aufgeführten Temperaturen zu homogenen Formmassen gewalzt und anschließend bei 190°C 10 min zu Prüfplatten verpreßt. Die Zusammensetzungen der Formmassen sowie Prüfergebnisse sind ebenfalls in der Tabelle 1 aufgeführt.

Tabelle 1: Zusammensetzung und Prüfergebnisse der Formmassen der Beispiele 1-4

| Beispiel | Zusammensetzung (Gew.-Verhältnis) | Walztemperatur (°C) | Schmelzviskosität bei 220°C 10 kg  21,6 kg (g) | | Vicat-Temperatur DIN 53460 Typ B (°C) | Schlagzähigkeit DIN 53435 RT (kJ/m²) |
|---|---|---|---|---|---|---|
| 1 | A 1/C 1 = 95/5 | 195 | 21 | 101 | 121 | 8,8 |
| 2 (Vergleich) | A 1 | 175* | 5 | 23 | 121 | 5,7 |
| 3 | A 2/C 2 = 95/5 | 207 | 23 | 137 | 126 | 11,7 |
| 4 (Vergleich) | A 2 | 205 | 15 | 67 | 126 | 11,6 |

* klebt auf der Walze

Beispiele 5-6

40 Gew.-Teile der Polymerisate der Beispiele 3 und 4 werden mit 60 Gew.-Teilen Polyvinylchlorid unter Zusatz von 1 Gew.-Teil Irgastab T 22 M auf einer Walze bei 185°C gewalzt und 10 min bei 190°C zu Prüfplatten verpreßt. Die Prüfergebnisse sind in der Tabelle 2 zusammengestellt.

Tabelle 2

| Prüfergebnisse an den Formmassen der Beispiele 5-6 | | |
|---|---|---|
| Beispiel-Nr. | Vicat-Temperatur Schlagzähigkeit | |
| | DIN 53460, Typ B ($°C$) | DIN 53 453, RT ($kJ/m^2$) |
| 5 | 103 | nicht gebrochen |
| 6 (Vergleich) | 100 | nicht gebrochen |

Die erfindungsgemäßen Beispiele zeigen, daß die erfindungsgemäßen Formmassen verbesserte Pulvereigenschaften wie niedrigerer Staubanteil, verbessertes Verarbeitungsverhalten auf der Walze wie Nichtkleben und eine erniedrigte Schmelzviskosität aufweisen. Zum Teil werden weiterhin die Zähigkeiten angehoben, während die Wärmeformbeständigkeiten nicht verringert werden, in Kombination der Formmassen mit PVC sogar erhöht.

**Patentansprüche**

1.  Formmassen aus

A        30 bis 99,9 Gew.-% eines thermoplastischen Vinyl(co)polymerisats aus

A.1      50 bis 99 Gew.-Teilen mindestens eines Monomeren aus der Gruppe der Vinylaromaten und Methacrylsäure-$C_1$-$C_4$-Alkylester und

A.2      1 bis 50 Gew.-Teilen mindestens eines Monomeren aus der Gruppe der Vinylcyanide, (Meth)Acrylsäure-$C_1$-$C_8$-Alkylester sowie der ethylenisch ungesättigten Carbonsäuren und den davon abgeleiteten Derivaten,

B        0 bis 60 Gew.-% eines Pfropfpolymerisats von

B.1      5 bis 95 Gew.-Teilen einer Pfropfauflage aus Vinylmonomerpolymerisat, wobei die Pfropfauflage erhalten wurde durch Pfropfpolymerisation einer Monomermischung aus

B.1.1    50 bis 99 Gew.-Teilen mindestens eines Monomeren aus der Gruppe der Vinylaromaten und Methacrylsäure-$C_1$-$C_4$-Alkylester und

B.1.2    1 bis 50 Gew.-Teilen mindestens eines Monomeren aus der Gruppe der Vinylcyanide, (Meth)Acrylsäure-$C_1$-$C_8$-Alkylester, sowie der ethylenisch ungesättigten Carbonsäuren und den davon abgeleiteten Derivaten, wie Anhydride und Imide, auf

B.2      5 bis 95 Gew.-Teile einer vernetzten, teilchenförmigen elastomeren Pfropfgrundlage mit einem durchschnittlichen Teilchendurchmesser ($d_{50}$-Wert) von 0,05 bis 5 $\mu$m, vorzugswei-se 0,1 bis 0,6 $\mu$m und einer Glasübergangstemperatur < 10°C, und

C        0,1 bis 70 Gew.-% eines Polymerisats aus

C.1      (Meth)Acrylsäure-$C_{10}$-$C_{40}$-Alkylestern, wobei

C.2      bis zu 80 Gew.-% der Komponente C.1 durch Styrol $\alpha$-Methylstyrol, Acrylnitril oder Methacrylsäure-$C_1$-$C_4$-Alkylester oder Mischungen daraus ersetzt sein können,

und wobei die Polymerisate C eine Sprödigkeitstemperatur von über +2°C besitzen und sich die Menge der Komponenten zu 100 Gew.-% addieren.